Europäisches Patentamt

European Patent Office

Office européen des brevets

(19)

(11) Veröffentlichungsnummer: **0 048 294 B1**

(12) # EUROPÄISCHE PATENTSCHRIFT

(45) Veröffentlichungstag der Patentschrift:
**16.01.85**

(51) Int. Cl.⁴: **B 60 N 1/06**

(21) Anmeldenummer: **80105654.0**

(22) Anmeldetag: **20.09.80**

(54) **Drehgelenk, insbesondere für Sitze mit verstellbarer Lehne.**

(43) Veröffentlichungstag der Anmeldung:
**31.03.82 Patentblatt 82/13**

(45) Bekanntmachung des Hinweises auf die Patenterteilung:
**16.01.85 Patentblatt 85/3**

(84) Benannte Vertragsstaaten:
**DE FR GB IT**

(56) Entgegenhaltungen:
**DE - A - 2 326 223**
**DE - B - 1 242 948**
**FR - A - 1 284 061**
**GB - A - 803 339**
**US - A - 3 156 004**

(73) Patentinhaber: **KEIPER RECARO GmbH & Co.,**
**Büchelstrasse 54-58, D-5630 Remscheid 14 (DE)**

(72) Erfinder: **Walk, Hansjörg, Ing. grad.,**
**Richard-Wagner-Strasse 34, D-7410 Reutlingen (DE)**
Erfinder: **Wingensiefen, Wilhelm, Ing. grad., Hollweg,**
**D-5068 Odenthal (DE)**

(74) Vertreter: **Buse, Karl Georg, Dipl.-Phys. et al,**
**Patentanwälte Dipl.-Phys. Buse Dipl.-Phys. Mentzel**
**Dipl.-Ing. Ludewig Unterdörnen 114,**
**D-5600 Wuppertal 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Drehgelenk, insbesondere für Sitze mit verstellbarer Lehne, bei dem zwei gegeneinander bewegbare Gelenkteile über eine Schwenkachse miteinander verbunden sind, wobei eine die Lage der beiden Gelenkteile zueinander bestimmende, als Getriebe mit wenigstens einer Stirnrad-Innenzahnrad-Paarung ausgebildete Ver- und Feststelleinrichtung vorgesehen ist, die einen auf der Schwenkachse angeordneten und mit dieser drehbaren Exzenter mit einer geneigten Fläche aufweist, die an der Stellfläche einer dem auf dem Exzenter gelagerten Getrieberad zugeordneten Lagerstelle anliegt und die Schwenkachse zusammen mit ihrem Exzenter mittels eines Kraftspeichers zur Erzeugung einer Radialverschiebung zwischen den beiden Gelenkteilen in axialer Richtung bewegbar ist.

Bei einem derartigen aus der DE-AS 2 326 223 bekannten Drehgelenk ist einer der beiden Gelenkteile mit einem Sitzteil und der andere Gelenkteil mit einer Rückenlehne verbunden. Der mit dem Sitzteil verbundene Gelenkteil ist seinerseits wiederum drehfest mit einem Stirnrad verbunden, welches mit einem Innenzahnrad kämmt, das mit dem der Rückenlehne zugehörigen Gelenkteil in drehfester Verbindung steht. Dieser der Rückenlehne zugehörige Gelenkteil stützt sich auf zentrischen Abschnitten einer Schwenkachse ab, auf deren exzentrischem Abschnitt das Stirnrad unter Zwischenschaltung von Buchsen gelagert ist. Der exzentrische Abschnitt der Schwenkachse weist im Bereich seiner grössten Exzentrizität eine keilartige Stellfläche auf, der senkrecht dazu verlaufende Führungsflächen benachbart sind. Dieser Exzenterabschnitt ist von einem Ring umgeben, der in seinem Inneren zum Exzenterabschnitt passende seitliche Führungsflächen und auch eine innere keilartige Stellfläche aufweist. Durch einen an einem zentrischen Abschnitt der Schwenkachse in axialer Richtung festgelegten Kraftspeicher ist der Exzenterabschnitt derart belastet, dass über den diesen umgebenden Ring die Verzahnungen von Stirnrad und Innenzahnkranz ineinandergepresst werden. Dadurch wird einerseits das Spiel der Verzahnung und andererseits das Lagerspiel zwischen der Schwenkachse und den Gelenkteilen eliminiert. In diesem Zustand ist die Verschwenkung der Gelenkteile sehr schwergängig, da infolge der Verspannung die Reibkräfte wesentlich erhöht sind. Aus diesem Grund ist zwischen dem zentrischen Abschnitt der Schwenkachse und der darauf angeordneten Stellhandhabe eine Hubnockeneinrichtung angeordnet, mit welcher zu Beginn der Stellbewegung am Drehgriff die Schwenkachse entgegen der Wirkung des Kraftspeichers in axialer Richtung im Lösesinne verschoben wird. Dadurch verringert sich die wirksame Exzentrizität der den Exzenterabschnitt umgebenden Exzenterbuchse so weit, dass ein ein leichtgängiges Verstellen des Stirnrades in dem Innenzahnrad gewährleistendes Zahnspiel gegeben ist. Nach dem Stellvorgang ist die Stellhandhabe geringfügig zurückzudrehen, um die Hubnockeneinrichtung in ihre Ausgangslage zurückzustellen, so dass der Kraftspeicher die Schwenkachse mit dem Exzenterabschnitt in eine Radialspiel eliminierende Spannlage zurückführt. Bei diesem bekannten Drehgelenk lässt sich zwar das Radialspiel im Feststellfall eliminieren, jedoch wird die dafür erforderliche Axialverschiebung der Schwenkachse nur durch die zusätzliche Mittel darstellende Hubnockeneinrichtung erzielt. Ausserdem stellt sich die Spannlage nicht durch blosses Loslassen der Stellenhandhabe selbsttätig wieder ein, sondern die Bedienungsperson hat nach Abschluss der eigentlichen Stellbewegung die Stellhandhabe in einer der eigentlichen Stellbewegung entgegenstehenden Bewegung zurückzudrehen, um im Feststellfall das Radialspiel auszugleichen.

Die Aufgabe der Erfindung besteht darin, ein Drehgelenk zu schaffen, bei dem die Exzentrizität des Exzenters einerseits zur leichtgängigen Verstellung während der Stellbewegung und andererseits zur Eliminierung des Radialspieles des Drehgelenkes während seiner Feststellage veränderbar ist, ohne dass vom Sitzbenutzer zur Eliminierung des Radialspiels eine dafür besondere Stellbewegung in die Schwenkachse einzuleiten ist.

Diese Aufgabe ist erfindungsgemäss dadurch gelöst, dass der Exzenter als Kegelstumpf ausgebildet ist und die den Exzenter umgebende Lagerstelle eine mit der Neigung des Kegelstumpfes übereinstimmende Kegelbohrung aufweist, deren Neigungswinkel kleiner als der Haftreibwinkel und grösser als der Gleitreibwinkel der Lagerpaarung ist, und dass der Exzenter vom Kraftspeicher in Richtung auf die Kegelbohrung beaufschlagt ist.

Bei einem aus der FR-A 1 284 061 bekannten Drehgelenk ist eine Bremswelle eingesetzt, auf welcher einerseits ein mit dem schwenkbaren Gelenkteil kämmendes Zahnrad und andererseits ein Kegelstumpf angeordnet ist. Dieser Kegelstumpf ist jedoch weder Bestandteil der Schwenkachse noch eines Exzenters, denn einen Exzenter weist dieses bekannte Drehgelenk nicht auf. Der Kegelstumpf der Bremswelle bildet mit einer am festen Gelenkteil gehalterten Kegelhülse eine Bremseinrichtung, die bei Lösung durch eine Handhabe eine Schnellverstellung des mit der Rückenlehne verbundenen Gelenkteiles erlaubt, indem die Rückenlehne vom Sitzbenutzer im einen oder anderen Sinn verschwenkt werden kann. Eine Eliminierung des sich aus Zahnflankenspiel und Lagerspiel zusammensetzenden Radialspieles erfolgt bei dem bekannten Drehgelenk nicht.

Die mit der Erfindung erzielten Vorteile sind darin zu sehen, dass durch die Überwindung der Haftreibung im Stellfall Gleitreibungskräfte wirksam sind, die beim Verstellen des Exzenters zusammen mit der Rückstellkraft des Kraftspeichers kleiner sind, als die aus den Radialkräften resultierende Axialkraft, wodurch der Exzenter im Sinne eines Radialspieles axial verschoben wird. Diese Axialkraftwirkung kehrt sich bei Unterbrechung bzw. Beendigung der Stellenbewegung um, da die Haftreibungskräfte dann grösser sind und zusammen mit der Federkraft die aus der Radialkraft resultierende Axialkraft überwinden, so dass der Exzenterabschnitt im Sinne einer Eliminierung des Radialspieles zurückgeschoben wird. Durch die Axialbewegung des Exzenterabschnittes der Schwenkachse ist ein Ausgleich der unvermeidlichen Fertigungstoleranzen möglich. Somit sind Mittel zur Aufrechterhaltung eines Spieles zur leichteren Verstellung entbehrlich, da sich dieses Spiel bei der Verstellung selbst einstellt. Ein besonderes Augenmerk braucht der Sitzbenutzer nach der Betätigung des Drehgelenkes nicht auf den Radialspielausgleich nach der Beendigung der Stellbewegung zu richten, da das Radialspiel sich ebenfalls selbsttätig nach Beendigung der Stellbewegung eliminiert. Weitere Vorteile ergeben sich durch die in den Unteransprüchen genannten Merkmale. So wird eine stabile Lage zwischen dem Stirnrad und dem Innenzahnrad in der eingestellten Lage der Gelenkteile durch eine geringere Krümmung des Kegelmantelflächenabschnittes des Exzenters im Bereich seiner grössten Exzentrizität als an seiner übrigen Kegelmantelfläche erzielt. Dadurch ergibt sich eine sichere Dreipunktabstützung der Schwenkachse an zwei Stellen der Kegelmantelfläche und einem mittig dazu liegenden Abstützpunkt, der im anderen Gelenkteil gelagerten zentrischen Abschnitte der Schwenkachse.

Im folgenden ist die Erfindung anhand von lediglich zwei Ausführungsbeispiele darstellenden Zeichnungen näher erläutert.

Es zeigen:

Fig. 1 ein Drehgelenk zur Verwendung zwischen Sitz und Rückenlehne eines Kraftfahrzeugsitzes in einer Seitenansicht, bei abgenommener Handhabe,

Fig. 2 das aus Fig. 1 ersichtliche Drehgelenk in einem Längsschnitt nach der Linie II–II von Fig. 1,

Fig. 3 ein weiteres Ausführungsbeispiel eines Drehgelenkes, dessen Gelenk ebenfalls in einem Längsschnitt dargestellt ist,

Fig. 4 die Abstützung des Exzenterabschnittes in der Lagerstelle eines Gelenkteiles in einem Schnitt nach der Linie IV–IV von Fig. 3 in gegenüber dieser vergrössertem Massstab.

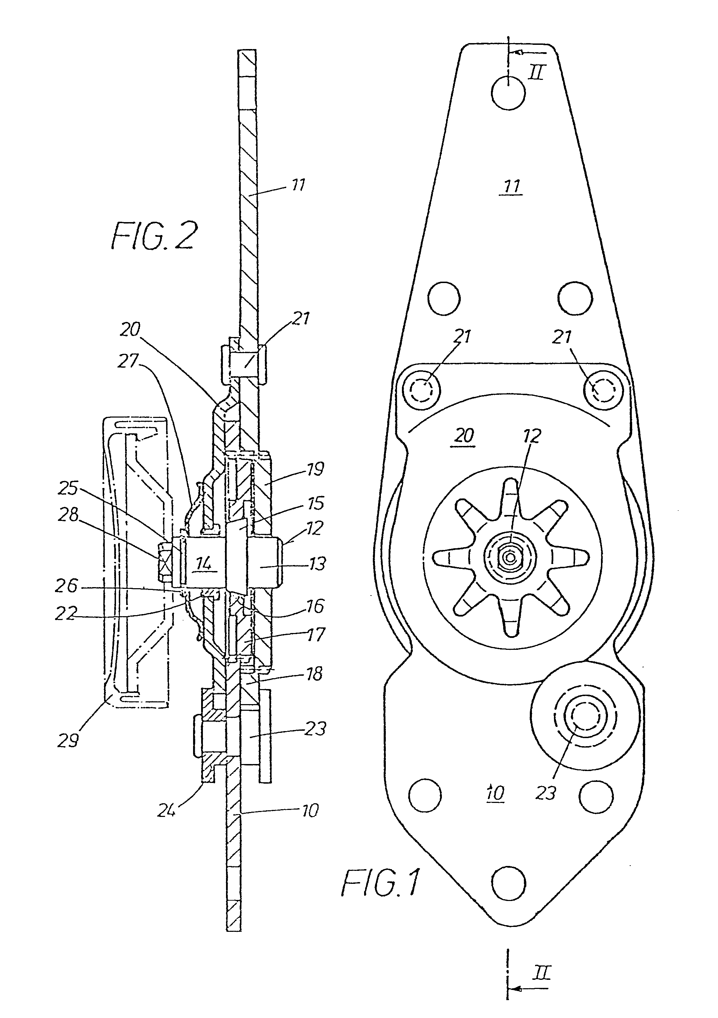

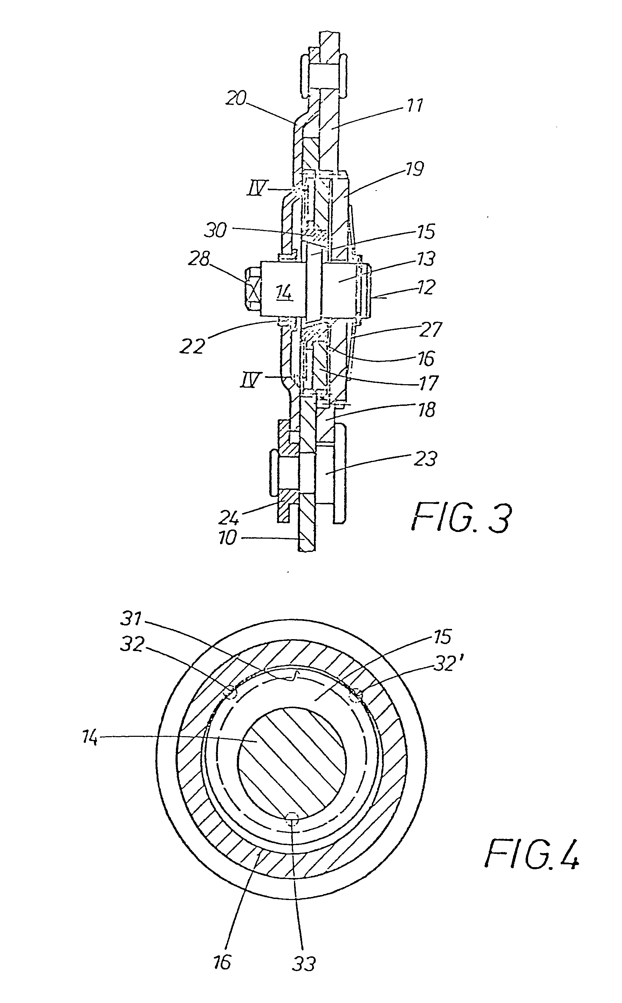

Das erfindungsgemässe Drehgelenk ist am Ausführungsbeispiel eines für Kraftfahrzeugsitze geeigneten Gelenkbeschlages erläutert. Dabei weisen die aus dem Fig. 1 und 3 ersichtlichen Gelenkbeschläge jeweils einen dem Sitzteil eines Kraftfahrzeugsitzes zugeordneten festen Gelenkteil 10 und einen an der Rückenlehne zu befestigenden, schwenkbaren Gelenkteil 11 auf, wobei diese Gelenkteile über eine Schwenkachse 12 drehgelenkig miteinander verbunden sind. Diese Schwenkachse 12 weist zwei zentrische Abschnitte 13 und 14 auf, zwischen denen sich ein als Exzenter 15 ausgebildeter Abschnitt befindet. Dieser Exzenter ist sowohl bei dem aus den Fig. 1 und 2 ersichtlichen Ausführungsbeispiel als auch aus dem aus Fig. 3 ersichtlichen Ausführungsbeispiel als Kegelstumpf ausgebildet, der von einer mit der Neigung des Kegelstumpfes übereinstimmenden Kegelbohrung 16 umfasst ist, die sich beispielsweise in dem Stirnrad 17 des festen Gelenkteiles 10 befindet. Dieses Stirnrad 17 besteht aus einer einstückig mit dem Gelenkteil 10 verbundenen und beispielsweise durch Fliesspressen hergestellten Wandscheibe, in deren zur Verzahnung konzentrischem Mittelpunktbereich die Kegelbohrung 16 angeordnet ist, deren Neigung dem Kegel des Exzenters entspricht. Der schwenkbare Gelenkteil 11 weist einen Innenzahnkranz 18 auf, dessen Kopfkreisdurchmesser um wenigstens eine Zahnhöhe grösser als der Kopfkreisdurchmesser des Stirnrades 17 ist. Auch die Zähnezahl des Innenzahnkranzes 18 ist um mindestens einen Zahn grösser als die Zähnezahl des Stirnrades 17. Dieser Innenzahnkranz 18 des Gelenkteiles 11 ist durch eine einstückig damit verbundene Wandscheibe 19 überbrückt, die sich auf dem zentrischen Abschnitt 13 der Schwenkachse 12 konzentrisch zum Innenzahnkranz 18 abstützt. Mit dem schwenkbaren Gelenkteil 11 ist ein Lagerschild 20 beispielsweise durch Niete 21 fest verbunden, der den Gelenkteil 10 in Bereich des Stirnrades 17 übergreifend und diesen zwischen sich und der Wandscheibe 19 des Gelenkteiles 11 einschliessend auf dem zentrischen Abschnitt 14 der Schwenkachse 12 mittels einer Gleitbuchse 22 gelagert ist. Dem axialen Zusammenhalt der Gelenkteile dient weiterhin ein Bundzapfen 23, der den Nieten 21 gegenüberliegend am Gelenkteil 10 mittels einer Kragenbuchse 24 vernietet ist, wobei der Kopf des Bundzapfens 23 den Gelenkteil 11 und der Kragen der Kragenbuchse 24 den Lagerschild 20 bereichsweise übergreifen. Der aus dem Lagerschild 20 ausragende zentrische Abschnitt 14 weist bei dem aus den Fig. 1 und 2 ersichtlichen Ausführungsbeispiel an seinem Ende eine Ringnut 25 auf, in welche ein Sicherungsring 26 eingreift, an dem sich eine einen Kraftspeicher bildende Federscheibe 27 einerends abstützt, die sich andernends am Lagerschild 20 anlegt. Aus der der Ringnut 25 benachbarten Stirnfläche des zentrischen Abschnitts 14 erhebt sich ein unrunder Zapfen 28, an dem beispielsweise ein in strichpunktierten Linien dargestelltes Handrad 29 festlegbar ist. Bei dem aus Fig. 2 ersichtlichen Ausführungsbeispiel ist der den Exzenter 15 bildende Kegelstumpf und die diesen umgebende Kegelbohrung 16 zum Zapfen 28 hin geneigt. Bei Einleitung einer Drehbewegung in die Schwenkachse 12 vermindern sich die die Wirkung der Federscheibe 27 unterstützenden Haftreibkräfte an den Lagerstellen der Schwenkachse, so dass die aus der auf den Exzenter 15 wirkende Radialkraft resultierende Axialkraft grösser ist als die Kraft der Federscheibe 27 und die diese unterstützenden Gleitreibungskräfte, wodurch die Schwenkachse 12 zusammen mit ihrem Exzenter 15 aus der in Fig. 2 dargestellten Feststellage nach rechts bewegt wird und sich die Stellbewegung erleichtert. Dabei ist die Neigung des Exzenters 15 derart zu wählen, dass der Haftreibwinkel im Selbsthemmungsbereich liegt.

Das aus Fig. 3 ersichtliche Ausführungsbeispiel weist im Hinblick auf die aus Fig. 2 ersichtliche Ausführung einige Unterschiede auf. Einer dieser Unterschiede besteht darin, dass sich die kegelige Bohrung 16 in einer Buchse 30 befindet, die in das Stirnrad 17 drehfest eingesetzt ist. Dadurch lässt sich durch die Verwendung verschiedenartiger Werkstoffe der Reibwert anpassen, und durch entsprechende Breitenwahl der Buchse 30 sowohl im Stützfall als auch im Bewegungsfall eine ganzflächige Anlage zwischen dem Exzenter 15 und der Kegelbohrung 16 erzielen. Ein weiterer Unterschied der aus Fig. 3 ersichtlichen Ausführungsform gegenüber der aus Fig. 2 ersichtlichen Ausführungsform besteht darin, dass die Kegelbohrung 16 sowie der als Kegelstumpf ausgebildete Exzenter 15 in Richtung auf die Wandscheibe 19 des Innenzahnrades 18 hin verjüngt ist. Dadurch bleibt der Lagerschild 20 von Axialkraftauswirkungen frei, da diese unmittelbar von dem Gelenkteil 11 aufgefangen werden. Dabei versteht es sich, dass bei der Ausführungsform gemäss Fig. 3 die den Kraftspeicher bildende Federscheibe 27 einerends auf dem zentrischen Abschnitt 13 ggfs. wiederum über einen in einer Ringnut 25 angeordneten Sicherungsring 26 abgestützt ist, während sich das andere Ende der Federscheibe 27 an der Wandscheibe 19 des Gelenkteiles 11 anlegt. Die Kraftverhältnisse bei der Stellbewegung und bei der Ruhelage des aus Fig. 3 ersichtlichen Drehgelenkes sind denen analog, die auch bei dem Ausführungsbeispiel nach Fig. 2 auftreten.

Um eine sichere Stützlage des Stirnrades auf der Schwenkachse zu erzielen, ist, wie in Fig. 4 dargestellt, ein Kegelmantelflächenabschnitt 31 des Exzenters 15 im Bereich der grössten Exzentrizität mit einer geringeren Krümmung versehen als die übrige Kegelmantelfläche des den Exzenter 15 bildenden Kegelstumpfes. Dadurch entstehen beiderseits der Längsmitte der Schwenkachse Übergangspunkte 32 und 32' zwischen dem flacher verlaufenden Kegelmantelflächenabschnitt 31 und der übrigen Kegelmantelfläche, die zusammen mit der unterseitigen Stützlinie 33 an den zentrischen Abschnitten 13 und 14 der Schwenkachse 12 eine Dreipunktabstützung bilden. Dabei erstreckt sich der abgeflachte Kegelmantelflächenabschnitt 31 im wesentlichen über einen etwa 90° grossen Winkelbereich.

Es sind noch mancherlei andere Ausführungen und Ausgestaltungen der Erfindung möglich. So ist es beispielsweise auch denkbar, die kegelige Bohrung in der Wandscheibe 19 anzuordnen und den Exzenter 15 auf der Schwenkachse derart zu plazieren, dass dieser in die kegelige Bohrung in der Wandscheibe 19 fasst. Ausserdem ist der Verwendungszweck derartiger Drehgelenke nicht auf den Einsatz bei Fahrzeugsitzen beschränkt, sondern ein derartiges Drehgelenk lässt sich überall dort verwenden, wo Radialspiel zu eliminieren ist. Dies kann neben der Anwendung bei Fahrzeugsitzen für deren Verstellung auch für die Verstellung von Fensterscheiben, Kopfstützen od. dgl. bedeutungsvoll sein.

## Patentansprüche

1. Drehgelenk, insbesondere für Sitze mit verstellbarer Lehne, bei dem zwei gegeneinander bewegbare Gelenkteile (10, 11) über eine Schwenkachse (12) miteinander verbunden sind, wobei eine die Lage der beiden Gelenkteile zueinander bestimmende, als Getriebe mit wenigstens einer Stirnrad-Innenzahnrad-Paarung (17, 18) ausgebildete Ver- und Feststelleinrichtung vorgesehen ist, die einen auf der Schwenkachse angeordneten und mit dieser drehbaren Exzenter (15) mit einer geneigten Fläche aufweist, die an der Stellfläche einer dem auf dem Exzenter gelagerten Getrieberad (17) zugeordneten Lagerstelle (16) anliegt und wobei die Schwenkachse (12) zusammen mit ihrem Exzenter (15) mittels eines Kraftspeichers (27) zur Erzeugung einer Radialverschiebung zwischen den beiden Gelenkteilen in axialer Richtung bewegbar ist, dadurch gekennzeichnet, dass der Exzenter (15) als Kegelstumpf ausgebildet ist und die den Exzenter umgebende Lagerstelle eine mit der Neigung des Kegelstumpfes übereinstimmende Kegelbohrung (16) aufweist, deren Neigungswinkel kleiner als der Haftreibwinkel und grösser als der Gleitreibwinkel der Lagerpaarung ist, und dass der Exzenter vom Kraftspeicher in Richtung auf die Kegelbohrung beaufschlagt ist.

2. Drehgelenk nach Anspruch 1, dadurch gekennzeichnet, dass die Kegelbohrung (16) in einer Buchse (30) angeordnet ist, die mit einem am Innenzahnkranz (18) des einen Gelenkteiles (11) abwälzenden Stirnrad (17) des anderen Gelenkteiles (10) fest verbunden ist.

3. Drehgelenk nach Anspruch 1 oder 2, dadurch gekennzeichnet, dass die Kegelbohrung (16) sich in Richtung auf die den Innenzahnkranz (18) überbrückende Wandscheibe (19) hin verjüngt.

4. Drehgelenk nach einem der vorhergehenden Ansprüche, dadurch gekennzeichnet, dass ein Kegelmantelflächenabschnitt (31) des Exzenters (15) im Bereich der grössten Exzentrizität eine geringere Krümmung aufweist als die übrige Kegelmantelfläche.

5. Drehgelenk nach Anspruch 4, dadurch gekennzeichnet, dass die Übergangspunkte (32, 32') vom flacheren Kegelmantelabschnitt (31) zur stärker gekrümmten Kegelmantelfläche etwa einen Winkel von maximal 90° zwischen sich einschliessen.

## Revendications

1. Articulation tournante en particulier pour des sièges à dossier réglable, dans laquelle deux parties d'articulation (10, 11) mobiles l'une par rapport à l'autre sont reliées entre elles par un axe de pivotement (12), dans laquelle est prévue une installation de déplacement et de positionnement déterminant la position des deux parties d'articulation l'une par rapport à l'autre et réalisée sous la forme d'un engrenage comportant au moins un couplage roue à denture intérieure-roue à denture extérieure (17, 18), cette installation comportant un excentrique (15) disposé sur l'axe de pivotement avec lequel il tourne et doté d'une surface inclinée qui vient en contact avec les surfaces de réglage d'une zone d'appui (16) prévue sur la roue d'engrenage (17) supportée par l'excentrique et dans laquelle l'axe de pivotement (12) est mobile avec son excentrique (15) en direction axiale au moyen d'un accumulateur de force (27) pour créer un glissement radial entre les deux parties d'articulation, caractérisée en ce que l'excentrique (15) est réalisé sous la forme d'un tronc en cône et la zone d'appui entourant l'excentrique comporte un alésage conique (16) correspondant à l'inclinaison du tronc de cône et dont l'angle d'inclinaison est inférieur à l'angle de frottements à l'adhérence (coincement) et supérieur à l'angle de frottement au glissement du couplage des portées, et en ce que l'excentrique est actionné par l'accumulateur de forces en direction de l'alésage conique.

2. Articulation tournante selon la revendication 1, caractérisée en ce que l'alésage conique (16) est disposé dans un manchon (30) qui est relié rigidement à une roue frontale (17) de l'autre partie d'articulation (10), engrenant avec la couronne à denture intérieure (18) de l'une des parties d'articulation (11).

3. Articulation tournante selon la revendication 1 ou 2, caractérisée en ce que l'alésage conique (16) est effilé en direction du flasque (19) prolongeant la couronne à denture intérieure (18).

4. Articulation tournante selon l'une des revendications précédentes, caractérisée en ce qu'une section de surface d'enveloppe conique (31) de l'excentrique (15) présente dans la zone de la plus grande excentricité une plus faible courbure que la surface d'enveloppe conique restante.

5. Articulation tournante selon la revendication 4, caractérisée en ce que les points de contact (32, 32') de la section d'enveloppe conique plane (31) s'étendent sur la surface d'enveloppe conique plus courbée sur un angle maximal d'environ 90° entre eux.

## Claims

1. A hinge, in particular for seats with adjustable seat back, in which two relatively movable hinge elements (10, 11) are connected with each other through a pivot shaft (12), wherein there is provided an adjusting and locking arrangement defining the relative position of the two hinge elements and designed as a gearing with at least one combination of mating spur and inner gears (17,18), which arrangement is provided with an eccentric (15) mounted on the pivot shaft and rotatable with it and having an inclined surface which engages at the adjusting surface of a bearing (16) associated with the gearwheel (17) mounted on the eccentric and wherein the pivot shaft (12) together with its eccentric (15) is movable in an axial direction by means of a force-storing element (27) to produce a radial movement between the two hinge elements, characterized in that the eccentric (15) is designed as a truncated cone and the bearing surrounding the eccentric has a conical bore (16) corresponding to the inclination of the truncated cone, whose angle of inclination is smaller than the angle of static friction and greater than the angle of the mating bearings, and that the eccentric is controlled by the force-storing element in a direction towards the conical bore.

2. A hinge as claimed in the claim 1, characterized in that the conical bore (16) is provided in a bushing (30) rigidly connected to a spur gear (17) of the hinge element (10), rolling off the inner ring gear (18) of the hinge element (11).

3. A hinge as claimed in the claim 1 or 2, characterized in that the conical bore (16) tapers in a direction towards the wall disk (19) bridging the inner ring gear (18).

4. A hinge as claimed in any one of the preceding claims, characterized in that a section of the generated surface of the cone (31) of the eccentric (15) has a smaller curvature in the area of greatest eccentricity than the rest of the generated surface of the cone.

5. A hinge as claimed in the claim 4, characterized in that the points of transition (32, 32') from the flatter section of the generated surface of the cone (31) to the more strongly curved generated surface of the cone include an angle of, say maximally 90° between them.

FIG.2

FIG.1

FIG. 3

FIG.4